# EUROPÄISCHE PATENTANMELDUNG

(11) **EP 4 230 872 A1**
(43) Veröffentlichungstag der Anmeldung: **23.08.2023**
(21) Anmeldenummer: 23153892.7
(22) Anmeldetag: 30.01.2023
(51) Int. Cl.: F04D 29/08, F04D 29/58, F04D 29/66, H02K 9/06, F04D 29/30

(54) **KÜHLRAD ZUR KÜHLUNG EINES STATORS EINES ELEKTROMOTORS SOWIE ELEKTROMOTOR MIT EINEM SOLCHEN KÜHLRAD**

(30) Priorität: 18.02.2022 DE 102022103895
(71) Anmelder: ebm-papst Mulfingen GmbH & Co. KG, 74673 Mulfingen (DE)
(72) Erfinder: HAAF, Oliver, 74635 Kupferzell (DE); Hufnagel, Volker, 91541 Rothenburg o. d. Tauber (DE); Rhein, Sebastian, 97980 Bad Mergentheim (DE)
(74) Vertreter: Staeger & Sperling Partnerschaftsgesellschaft mbB

(57) **Zusammenfassung**

Die Erfindung betrifft ein Kühlrad (1) zur Kühlung eines Stators (4) eines Elektromotors (2), wobei das Kühlrad (1) an einem um eine Rotationsachse (X) rotierbaren Rotor (3) des Elektromotors (2) drehfest fixierbar ist, wobei das Kühlrad (1) eine ringförmige, sich von einer radialinneren Innenkante (11) zu einer radialäußeren Außenkante (12) erstreckende, die Rotationsachse (X) in Umfangsrichtung (U) umlaufende Kühlschaufel (10) zur Erzeugung einer Luftströmung aufweist, wobei die Kühlschaufel (10) eine sich von der Innenkante (11) zu der Außenkante (12) erstreckende Kühlfläche (13) aufweist und wobei die Kühlfläche (13) und/oder die Kühlschaufel (10) in Umfangsrichtung (U) einen vorbestimmten und parallel der Rotationsachse (X) alternierenden Verlauf (V) aufweist.

## Beschreibung

Die Erfindung betrifft ein Kühlrad zur Kühlung eines Stators eines Elektromotors sowie einen Elektromotor mit einem solchen Kühlrad.

Aus dem Stand der Technik ist eine Vielzahl von Kühlvorrichtungen und Kühlräder zur Kühlung von Elektromotoren und insbesondere Außenläufermotoren bekannt.

Die meist verwendeten Kühlräder weisen oftmals eine Vielzahl von einzelnen Schaufeln auf, welche zur Kühlung des Stators mit dem Kühlrad bzw. mit einem Rotor des Elektromotors um eine Rotationsachse rotiert werden und welche zueinander beabstandet sind, sodass ein Luftstrom erzeugt wird, welcher zwischen den einzelnen Kühlrädern hindurchgefördert wird.

Unabhängig davon, ob es sich um ein herkömmliches Kühlrad mit einer Vielzahl von gleichartigen und oftmals in einem Tragflächenprofil ausgebildeten Schaufeln oder um ein Kühlrad mit speziellen Schaufeln, wie beispielsweise den aus der Schrift DE 10 2016 107 656 A1 bekannten pfeilförmigen Schaufeln, handelt, entstehen durch die zu der Rotationsachse in Radialrichtung verlaufenden Schaufelkanten Geräusche, wodurch die mittels der Kühlräder gekühlten Elektromotoren im Betrieb entsprechend laut sind.

Hinzukommt, dass die Kühlung bei herkömmlichen Kühlrädern mit gleichartig ausgerichteten Schaufeln lediglich an eine vorbestimmte Rotationsrichtung gebunden bzw. bei einer Rotation in die entgegengesetzte Richtung äußerst ineffizient ist.

Bei der von der Schrift DE 10 2016 107 656 A1 vorgeschlagenen Lösung sind hierfür paarweise entgegengesetzte pfeilförmige Schaufeln vorgesehen, welche jedoch an ihren zumindest anteilig in Radialrichtung verlaufenden Kanten entsprechende Geräusche erzeugen.

Der Erfindung liegt deshalb die Aufgabe zugrunde, die vorgenannten Nachteile zu überwinden und ein Kühlrad zur Kühlung eines Elektromotors bereitzustellen, welches sowohl eine geräuscharme als auch eine rotationsrichtungsunabhängige Kühlung des Elektromotors ermöglicht.

Diese Aufgabe wird durch die Merkmalskombination gemäß Patentanspruch 1 gelöst.

Erfindungsgemäß wird daher ein Kühlrad zur Kühlung eines Stators eines Elektromotors und insbesondere eines Außenläufermotors vorgeschlagen. Das Kühlrad ist an einem um eine Rotationsachse rotierbaren Rotor des Elektromotors drehfest fixierbar. Insbesondere in einem Zustand, bei welchem das Kühlrad an dem Rotor fixiert ist, ist die Rotationsachse des Kühlrades zugleich eine Rotationsachse des Rotors bzw. deren Rotationsachsen koaxial zueinander. Erfindungsgemäß ist vorgesehen, dass das Kühlrad eine und vorzugsweise genau eine ringförmige, sich von einer radialinneren Innenkante zu einer radialäußeren Außenkante erstreckende Kühlschaufel zur Erzeugung einer Luftströmung aufweist, welche die Rotationsachse in Umfangsrichtung um die Rotationsachse umläuft. Radialinnen und radialaußen sowie die Umfangsrichtung beziehen sich dabei jeweils auf die Rotationsachse des Kühlrades bzw. des Rotors. Die Kühlschaufel weist dabei eine sich von der Innenkante zu der Außenkante erstreckende und vorzugsweise in Umfangsrichtung und in Radialrichtung vollständig geschlossene Kühlfläche auf. Weiter weist die Kühlfläche und/oder die Kühlschaufel in Umfangsrichtung einen vorbestimmten und in eine Richtung parallel zu der Rotationsachse alternierenden d.h. wellenartigen Verlauf auf. Entsprechend beschreibt der Verlauf, welcher durch eine vorbestimmte Funktion bestimmt sein kann, eine Formgebung und beispielsweise eine Welligkeit der Kühlfläche bzw. Kühlschaufel.

Daraus folgt, dass die Kühlfläche einen in Umfangsrichtung wellenartigen Verlauf um die Rotationsachse aufweist. In einem Zustand bei welchem die Kühlschaufel benachbart zu einem Stator angeordnet ist, nähert sich die Kühlfläche periodisch dem benachbarten Stator und/oder am Stator vorgesehenen Kühlelementen an und entfernt sich wieder von diesem bzw. diesen.

Durch den alternierenden bzw. wellenartigen Verlauf, ist die Kühlschaufel vorzugsweise ausgebildet, an ihrer Kühlfläche eine Luftströmung zu erzeugen, welche Luft parallel der Rotationsachse ansaugt und in Radialrichtung ausbläst oder umgekehrt. Dadurch, dass die mit dem Luftstrom geförderte Luft dabei die Kühlschaufel nicht parallel der Rotationsachse durchströmt sondern ausschließlich entlang der Kühlfläche strömt, wobei keine von einzelnen Kühlschaufeln gebildeten scharfen Kanten überströmt werden, kommt es zu einer sehr geringen Geräuschentwicklung.

Unabhängig vom Stator, alterniert die Kühlfläche bzw. ein Verlauf der Kühlfläche bezüglich ihrer Amplitude um eine zu der Rotationsachse orthogonale Mittelebene.

Als umfangsgeschlossen ist hierbei zu verstehen, dass die Kühlfläche bzw. das Kühlrad in Umfangsrichtung in sich selbst übergeht und dadurch in Umfangsrichtung endlos ist.

Soweit von einem Anfang und Ende des Kühlrades bzw. der Kühlfläche in Umfangsrichtung gesprochen werden kann, sind Anfang und Ende unmittelbar miteinander verbunden bzw. identisch und gehen ineinander über.

Dadurch, dass eine Kühlschaufel mit einer Kühlfläche mit dem beschriebenen Verlauf vorgesehen ist, weist die Kühlschaufel keine in Radialrichtung verlaufenden Kanten, sondern ausschließlich zwei jeweils in sich geschlossene und in Umfangsrichtung verlaufende Kanten (Innenkante und Außenkante) auf. Somit kann es zu keiner Geräuschentwicklung durch das Rotieren von in Radialrichtung verlaufenden Kanten und deren Interaktion mit dem Stator bzw. Kühlelementen des Stators oder über diese streichende Luft kommen.

Die Wellenform der Kühlschaufel sorgt für eine bessere Beaufschlagung des Stators bzw. der Kühlelemente des Stators in axialer Richtung und die durch die Luftströmung geförderte Luft wird gezielt in zwischen den Kühlelementen gebildete Kühlkanäle gedrückt.

Auf einer der Kühlfläche an der Kühlschaufel gegenüberliegenden Seite, weist die Kühlschaufel vorzugsweise eine zu dem Verlauf der Kühlfläche korrespondierenden Verlauf auf.

Weiter kann nicht nur lediglich die Kühlfläche, sondern die gesamte Kühlschaufel dem vorbestimmten Verlauf bzw. der den Verlauf bestimmenden Funktion folgen, sodass also die gesamte Kühlschaufel dem vorbestimmten Verlauf folgend und mithin wellig ausgebildet sein kann.

Eine vorteilhafte Weiterbildung sieht vor, dass der Verlauf der Kühlfläche und/oder der Kühlschaufel sich in Umfangsrichtung periodisch wiederholt und insbesondere sich periodisch wiederholende Abschnitte aufweist.

Weiter kann hierbei vorgesehen sein, dass zumindest ein sich periodisch wiederholender Abschnitt und vorzugsweise alle sich periodisch wiederholenden Abschnitte der Kühlfläche, durch welchen der sich in Umfangsrichtung periodisch wiederholende Verlauf gebildet wird, symmetrisch und insbesondere achssymmetrisch zu einer jeweiligen parallel zu der Rotationsachse verlaufenden Symmetrielinie ist.

Alternativ oder zusätzlich kann auch vorgesehen sein, dass zumindest ein sich periodisch wiederholender Abschnitt, durch welchen der sich in Umfangsrichtung periodisch wiederholende Verlauf gebildet wird, in Umfangsrichtung geneigt ist. Dabei kann der Abschnitt in oder entgegen einer einzelnen Richtung in Umfangsrichtung geneigt sein, wobei auch Abschnitte vorgesehen sein können, welche in entgegengesetzte Richtungen geneigt sind. Dadurch kann die durch das Kühlrad erzeugbare Luftströmung drehrichtungsabhängig ausgebildet werden, da durch die geneigten Abschnitte beispielsweise nur dann eine Luftströmung erzeugbar ist, wenn das Kühlrad in eine vorbestimmte Richtung um die Rotationsachse rotiert wird.

Weiter kann der Verlauf auch symmetrisch und insbesondere punktsymmetrisch zu einem Spiegelpunkt sein, welcher auf einer zu der Rotationsachse parallel verlaufenden Linie liegt.

Durch die Symmetrie bzw. Achs- oder Punktsymmetrie der einzelnen Abschnitte kann eine besonders vorteilhafte rotationsrichtungsunabhängige Kühlung erreicht werden, da der von dem Kühlrad erzeugte Luftstrom bei einer Rotation in beide Rotationsrichtungen jeweils im Wesentlichen identisch ist.

Die periodischen Wellen bzw. allgemein die Kühlschaufel mit ihrer Kühlfläche hat die Funktion einer Schaufel und fördert Kühlluft so, dass die Wärme vom Stator und insbesondere die Wärme vom Stator über die am Stator vorgesehenen Kühlelementen mit der erzeugten Luftströmung abgeführt werden kann. Im Gegensatz zu einer freistehenden Schaufel mit in Radialrichtung verlaufenden Kanten oder einer Vielzahl solcher Schaufeln ist das Kühlrad bzw. die Kühlschaufel des vorgeschlagenen Kühlrads vorzugsweise kontinuierlich (stetig) und hat daher keine klare in Radialrichtung verlaufende Schaufelkante, welche mit dem Stator bzw. dessen Kühlelementen interagieren und ein (tonales) Geräusch erzeugen könnte.

Weiter sieht eine vorteilhafte Weiterbildung vor, dass die Außenkante der Kühlschaufel insbesondere vollständig auf einer Mantelfläche eines gedachten, das Kühlrad einhüllenden Zylinders oder Kegels verläuft. Die in einer Seitenansicht der Kühlrads sichtbaren Seitenkanten verlaufen somit parallel zueinander oder aufeinander zu.

Besonders vorteilhaft ist ferner, wenn der alternierende Verlauf der Kühlfläche und/oder der Kühlschaufel abwechselnd konkav und konvex ist.

Vorzugsweise folgt der Verlauf der Kühlfläche und/oder der Kühlschaufel einer vorbestimmten Funktion, wobei die vorbestimmte Funktion eine sich periodisch wiederholende Funktion und vorzugsweise eine Sinusfunktion oder eine Überlagerung von Sinusfunktionen ist.

Der Verlauf ist jedoch nicht auf eine Sinusfunktion oder eine Überlagerung von Sinusfunktionen begrenzt. Beispielsweise kann der Verlauf auch aus paarweise entgegengesetzt ausgerichteten oder gleichartig ausgerichteten Dreiecken, Teilkreisen, Ellipsen oder Radien gebildet sein.

Wird der Verlauf durch eine Sinusfunktion gebildet, weist der Verlauf in Umfangsrichtung insbesondere zwischen 4 und 50 Perioden und vorzugsweise zwischen 10 und 30 Perioden auf, sodass durch die gewählte Anzahl von Perioden die Rotationsachse vollständig umlaufen wird.

Weiter ist die den Verlauf der Kühlfläche beschreibende Funktion nicht nur stetig, sondern vorzugsweise auch über den gesamten Verlauf differenzierbar, sodass die Funktion gemäß einer vorteilhaften Weiterbildung keinen Knick aufweist.

Wie bereits erwähnt, sieht eine besonders vorteilhafte Variante vor, dass die Kühlfläche vollständig geschlossen ist d.h. keine Öffnungen oder Ausnehmungen die Kühlfläche unterbrechen.

Alternativ kann die Kühlschaufel jedoch auch sich von radialinnen nach radialaußen erstreckende und die Kühlfläche segmentierende Ausnehmungen oder Schnitte aufweisen, wobei diese vorzugsweise derart ausgebildet sind, dass die erzeugte Luftströmung diese Ausnehmungen oder Schnitte nicht durchströmen kann.

Entsprechend dem Verlauf der Kühlfläche kann ferner vorgesehen sein, dass die Innenkante und/oder die Außenkante einem vorbestimmten, stetigen und in eine Richtung parallel zu der Rotationsachse alternierenden Verlauf folgt, welcher insbesondere zu dem Verlauf der Kühlfläche korrespondiert bzw. diesem entspricht.

Dabei ist zu berücksichtigen, dass die Kühlschaufel durch die ihre Ringform meist nicht über ihre gesamte radiale Erstreckung einen gleichen Verlauf aufweisen kann, da der Verlauf nahe der Rotationsachse gegenüber einem Verlauf dem gegenüber entfernt von der Rotationsachse gestaucht ist. Entsprechend korrespondiert der Verlauf der Innenkante vorzugsweise zu dem Verlauf der Außenkante, ist aber nicht vollständig zu diesem identisch. Vielmehr kann der Verlauf der Außenkante beispielsweise einem gestreckten Verlauf der Innenkante bzw. ist der Verlauf der Innenkante einem gestauchten Verlauf der Außenkante entsprechen.

Durch den wellenartigen Verlauf der Kühlfläche kann auch von Amplituden gesprochen werden mit welchen der Verlauf um eine Mittellinie bzw. eine Mittelebene herum schwingen kann. Obgleich sich periodisch wiederholende Abschnitte vorgesehen sein können, kann alternativ auch vorgesehen sein, dass sich die Amplituden des Verlaufs ändern. Beispielsweise kann die Amplitude des Verlaufs von einem gedachten Startpunkt in Umfangsrichtung zunehmen. Nach einer maximalen Amplitude kann unmittelbar die minimale Amplitude am Startpunkt folgen oder die Amplituden können bis zu der Amplitude im Startpunkt wieder abnehmen.

Zur Montage des Kühlrades an dem Rotor kann das Kühlrad gemäß einer weiteren vorteilhaften Variante ferner eine Flanschhülse zur Montage des Kühlrades an dem Rotor aufweisen. Dabei geht die Kühlschaufel an ihrer Innenkante oder ihrer Außenkante stoffschlüssig in die Flanschhülse übergeht oder ist drehfest an der Flanschhülse fixiert.

Insbesondere um den Rotor bzw. allgemein den Elektromotor vor einem Eindringen von Partikeln und Schmutz zu schützen kann ferner vorgesehen sein, dass an der Flanschhülse zumindest ein ringförmiger Dichtvorsprung ausgebildet ist, welcher sich zumindest anteilig und/oder zumindest abschnittsweise parallel zu der Rotationsachse erstreckt und die Rotationsachse in Umfangsrichtung vollständig umläuft. Der zumindest eine Dichtvorsprung ist hierbei ausgebildet, mit zumindest einem relativ zu dem Stator ortsfesten und die Rotationsachse in Umfangsrichtung vollständig umlaufenden Gegenvorsprung dichtend zusammen zu wirken und insbesondere eine Labyrinthdichtung zu bilden.

Der Gegenvorsprung kann hierfür unmittelbar durch den Stator ausgebildet oder zumindest drehfest an diesem fixiert sein.

Weiter kann das Kühlrad gemäß einer vorteilhaften Variante eine umfangsgeschlossene und die Rotationsachse in Umfangsrichtung umlaufende Abschlusshülse aufweisen, welche das Kühlrad an einer von dem Rotor abgewandten Seite abschließt bzw. ausgebildet ist, das Kühlrad radialaußen abzuschließen. Ist das Kühlrad also an seiner Innenkante mit einer gegebenenfalls vorhandenen Flanschhülse verbunden, ist die Abschlusshülse an der gegenüberliegenden Außenkante vorgesehen, wobei das Kühlrad an der Au-ßenkante stoffschlüssig in die Abschlusshülse übergehen oder zumindest drehfest an der Abschlusshülse fixiert sein kann. Eine solche Abschlusshülse kann dabei die jeweils konvexen und/oder die jeweils konkaven Abschnitte des Verlaufs verschließen.

Die Abschlusshülse kann dabei rohrförmig ausgebildet sein und die Kühlschaufel radialaußen über die gesamte Erstreckung der Kühlschaufel in Axialrichtung parallel der Rotationsachse abdecken oder an einer Kante bzw. der Außenkante der Kühlschaufel anschließen und sich in Axialrichtung zu dem Stator hin oder von dem Stator weg und bis zu einer gedachten orthogonalen Ebene erstrecken, welche auf der Kühlschaufel aufliegt.

Da die Kühlwirkung bzw. der kühlende Luftstrom ausschließlich von der Kühlfläche erzeugt wird, welche vorzugsweise dem Stator zugewandt ist, kann eine der Kühlfläche gegenüberliegende Ober- bzw. Deckfläche der Kühlschaufel abgedeckt sein, wodurch eine Verschmutzung des Kühlrades bzw. der Kühlschaufel verhindert und die Geräuschentwicklung weiter reduziert werden kann. Hierfür sieht eine vorteilhafte Weiterbildung vor, dass Kühlrad ferner einen die Kühlschaufel in einer zu der Rotationsachse orthogonalen Ebene abdeckenden Abschlussring aufweist. Dieser kann vollständig in der zu der Rotationsachse orthogonalen Ebene verlaufen und kann weiter auf der Kühlschaufel aufliegen oder an diese angrenzen. Der Abschlussring ist insbesondere an einer von dem Stator bzw. an einer von den Kühlelementen des Stators abgewandten Seite der Kühlschaufel angeordnet. Sind Flansch- und/oder Abschlusshülse vorhanden, kann der Abschlussring mit einer der Hülsen oder beiden Hülsen verbunden sein.

Weiter ist die Kühlschaufel bei einer vorteilhaften Weiterbildung des Kühlrades ausgebildet, mit relativ zu dem Stator ortsfesten Kühlelementen zusammenzuwirken und bei einer Rotation des Kühlrades um die Rotationsachse ab einer vorbestimmten Geschwindigkeit eine turbulente Strömung zwischen der Kühlschaufel und den Kühlelementen zu erzeugen. Die Kühlelemente sind dabei vorzugsweise als Kühlrippen ausgebildet, welche sich in Radialrichtung erstrecken.

Dabei entstehen durch hohe Strömungsgeschwindigkeiten zwischen den Kühlelementen des Stators und der Kühlschaufel bzw. allgemein dem Kühlrad eine turbulente Strömung, wodurch der Wärmeübergangskoeffizient zwischen der durch die Luftströmung transportierten Kühlluft und dem Stator maximiert wird. Die Strömungsgeschwindigkeit lässt sich neben der Amplitude der periodischen Wellen, also der Amplitude bzw. den Amplituden des Verlaufs der Kühlfläche, durch einen Abstand der Kühlschaufel und der Kühlfläche zu den Kühlelementen, durch die Anzahl der Perioden über den Umfang, sowie durch den Abstand und die Dimensionierung der Kühlelemente auf der Statorbuchse beeinflussen. Dadurch kann gezielt eine turbulente Strömung erreicht werden.

Zudem sieht eine vorteilhafte Variante vor, dass das Kühlrad einteilig und insbesondere einstückig ausgebildet ist.

Gemäß einem weiteren Aspekt der Erfindung wird ein Elektromotor, insbesondere ein Außenläufermotor vorgeschlagen. Der Elektromotor weist einen Stator und einen Rotor sowie ein erfindungsgemäßes Kühlrad auf. Das Kühlrad ist ggfs. über eine Flanschhülse drehfest an dem Rotor fixiert und mit dem Rotor um eine gemeinsame Rotationsachse rotierbar. Weiter sind an dem Stator benachbart, insbesondere unmittelbar benachbart, d.h. ohne dazwischenliegende Elemente, zu dem Kühlrad vorzugsweise in Radialrichtung verlaufende Kühlelemente vorgesehen, sodass bei einer Rotation des Rotors mit dem Kühlrad eine Luftströmung erzeugbar ist, welche die Wärme von den Kühlelementen abführt.

Vorzugsweise sind die Kühlelementen integral mit dem Stator ausgebildet und/oder in Umfangsrichtung gleichmäßig beabstandet zueinander ausgebildet und/oder verlaufen in Radialrichtung.

Bei einer Rotation des Rotors mit dem Kühlrad wird Außenluft durch die zwischen den radialen Kühlelemente gebildete Kanäle gefördert. Die Luft dient dabei als Kühlluft und kühlt den Stator bzw. eine Statorbuchse des Stators, mit welchem die Kühlelementen ausgebildet bzw. verbunden sind. Durch das Kühlrad kann die erwärmte Luft zwischen den Kühlelementen bzw. durch die Kanäle gefördert und vorzugsweise radial abgeführt werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: Seitenansicht auf einen Elektromotor mit einem Kühlrad;
- Fig. 2: Schnittansicht durch einen Elektromotor mit einem Kühlrad;
- Fig. 3: Detailansicht einer Schnittansicht gemäß Figur 2;
- Fig. 4: perspektivische Darstellung eines Kühlrads gemäß einer ersten Ausführungsvariante;
- Fig. 5: Seitenansicht auf ein Kühlrad gemäß Figur 4;
- Fig. 6: perspektivische Darstellung eines Kühlrads gemäß einer zweiten Ausführungsvariante;
- Fig. 7: perspektivische Darstellung eines Kühlrads gemäß einer dritten Ausführungsvariante;
- Fig. 8: perspektivische Darstellung eines Kühlrads gemäß einer vierten Ausführungsvariante;
- Fig. 9: ein erster alternativer Verlauf der Kühlfläche bzw. Kühlschaufel;
- Fig. 10: ein zweiter alternativer Verlauf der Kühlfläche bzw. Kühlschaufel;
- Fig. 11: ein dritter alternativer Verlauf der Kühlfläche bzw. Kühlschaufel.

Die Figuren sind beispielhaft schematisch. Gleiche Bezugszeichen in den Figuren weisen auf gleiche funktionale und/oder strukturelle Merkmale hin.

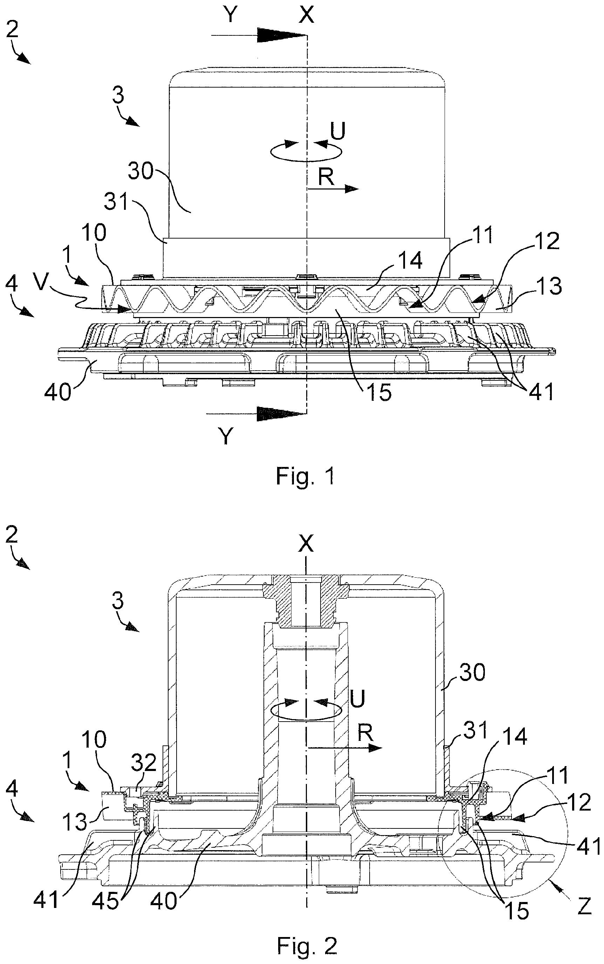

Die Figuren 1 bis 5 zeigen verschiedene Ansichten bzw. Komponenten eines Kühlrades 1 bzw. eines als Außenläufermotor ausgebildeten Elektromotors 2 mit einem solchen Kühlrad 1.

Dabei ist der Elektromotor 2 mit seinem Rotor 3 und seinem Stator 4, sowie mit dem an dem Rotor 3 drehfest fixierten Kühlrad 1 in einer Seitenansicht gezeigt.

In Figur 2 ist eine Schnittansicht durch die Elektromotor 2 gemäß Figur 1 entlang des in Figur 1 angetragenen Schnittebene Y-Y dargestellt.

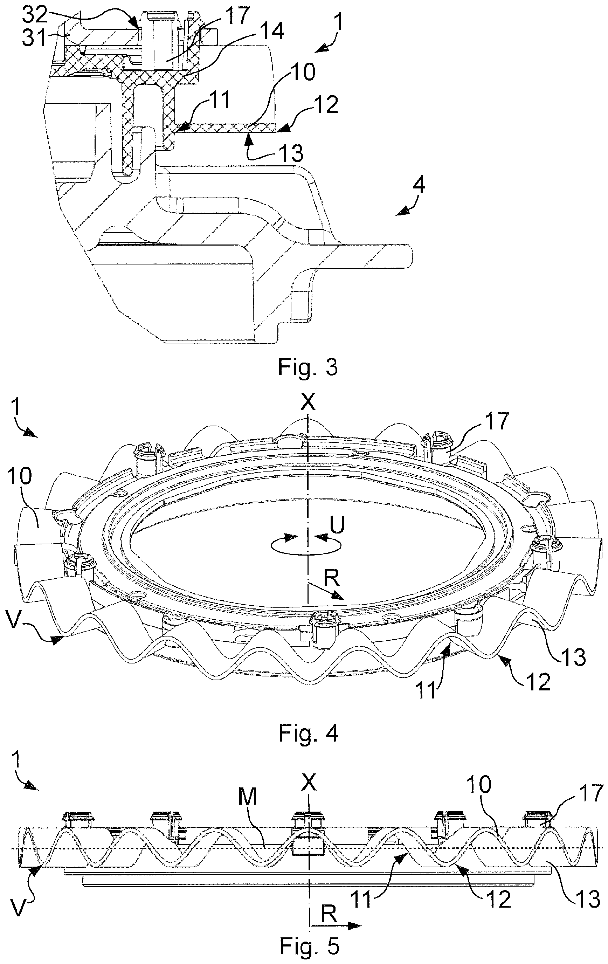

Weiter ist in Figur 3 eine vergrößerte Detailansicht des in Figur 2 mit Z benannten Bereiches abgebildet.

Das Kühlrad 1 gemäß der perspektivischen Darstellung der Figur 4 und der Seitenansicht gemäß Figur 5 entsprechen dem Kühlrad, wie es an dem Elektromotor 2 der Figuren 1 bis 3 vorgesehen ist, sodass die diesbezüglichen Beschreibungen uneingeschränkt für die Figuren 1 bis 5 gelten.

In Figur 1 ist ein Elektromotor 2 abgebildet, an dessen Rotor 3 ein erfindungsgemäßes Kühlrad 1 drehfest fixiert ist. Die Fixierung des Kühlrades 1 wird über eine insbesondere in Figur 2 sichtbare Flanschhülse 14 realisiert, welche über an der Flanschhülse 14 ausgebildete Rastvorsprünge 17 in Rastöffnungen 32 eingerastet sind, die an bzw. in einem Flansch 31 des Rotors 3 vorgesehen sind. Der Flansch 31 kann integral mit einem Rotorgehäuse 30 ausgebildet oder wie dargestellt drehfest an diesem fixiert sein.

Zusätzlich zu den an der Flanschhülse 14 vorgesehenen Rastvorsprüngen 17 oder alternativ zu diesen, können auch weitere Befestigungselemente, wie beispielsweise Durchgänge oder Gewindelöcher an der Flanschhülse 14 ausgebildet sein, um die Flanschhülse 14 bzw. das Kühlrad 1 an dem Rotor 3 fixieren zu können.

Wie dargestellt, ist das Kühlrad 1 unmittelbar benachbart zu dem Stator 4 an dem Rotor 3 fixiert, sodass also zwischen dem Kühlrad 1 und insbesondere der Kühlfläche 13 des Kühlrades 1 und dem Stator 4 bzw. den vorliegend als Kühlrippen 41 ausgebildeten Kühlelementen des Stators 4 keine Elemente liegen. Die Kühlrippen 41 sind bei dem dargestellten Beispiel integral mit dem Statorflansch des Stators 4 ausgebildet. Entsprechend kann bei einer Rotation des Rotors 3 mit dem daran fixierten Kühlrad 1 eine turbulente (Luft-) Strömung von dem Kühlrad 1 erzeugt werden, durch welche eine den Stator 4 bzw. die Kühlrippen 41 kühlende Luft zwischen den Kühlrippen 41 gefördert wird. Dabei bilden jeweils zwei unmittelbar zueinander benachbarte Kühlrippen 41 einen Kühlkanal zwischen sich aus, durch welchen die Luft eine kühlende Wirkung erzeugend förderbar ist.

Vorliegend sind die Kühlrippen 41 einstückig an einer Statorbuchse 40 des Stators 4 ausgebildet und verlaufen jeweils in Radialrichtung R.

Dadurch, dass das Kühlrad 1 keine Vielzahl von Schaufeln mit in Radialrichtung R verlaufenden Kanten, sondern lediglich eine einzelne, wellenförmige Kühlschaufel 10 aufweist, welche entsprechend keine in Radialrichtung verlaufende Kante hat, kommt es zwischen den Kühlrippen 41 und der Kühlschaufel 10 zu keiner bzw. zu einer stark reduzierten ein Geräusch erzeugende Interaktion, wobei dennoch eine turbulente Strömung zwischen den Kühlrippen 41 erzeugbar ist, sodass ein den Stator 4 kühlender Luftstrom ohne eine starke Geräuschentwicklung gewährleistet werden kann.

Um ein Inneres des Rotors 3 bzw. den Elektromotor 2 vor einem Eindringen von Schmutz bzw. allgemein Partikeln zu schützen, sind vorliegend an dem Kühlrad 1 zwei Dichtvorsprünge 15 vorgesehen, welche zueinander in Radialrichtung R beabstandet angeordnet sind und jeweils die Rotationsachse X in Umfangsrichtung U vollständig ringförmig umlaufen. In den Zwischenraum zwischen die beiden Dichtvorsprünge 15 erstreckt sich ein erster Gegenvorsprung 45, wobei radial innen an dem in Radialrichtung R näher an der Rotationsachse X liegenden Dichtvorsprung 15 ein zweiter Gegenvorsprung 45 vorgesehen ist. Dicht Gegendichtvorsprünge 45 sind ebenfalls in Radialrichtung R zueinander beabstandet und umlaufen die Rotationsachse X in Umfangsrichtung U vollständig sowie ringförmig. Dadurch wirken die beiden Dichtvorsprünge 15 mit den beiden Gegendichtvorsprüngen 45 zusammen und bilden eine Labyrinthdichtung.

Insbesondere in Figur 5 ist der Verlauf V der Kühlfläche 13 bzw. der gesamten Kühlschaufel 10 erkennbar, welcher vorliegend einer Sinus-Funktion entspricht. Dabei alterniert die Amplitude der Funktion bzw. des Verlaufs V um eine gedachte und zu der Rotationsachse X orthogonale Mittelebene M.

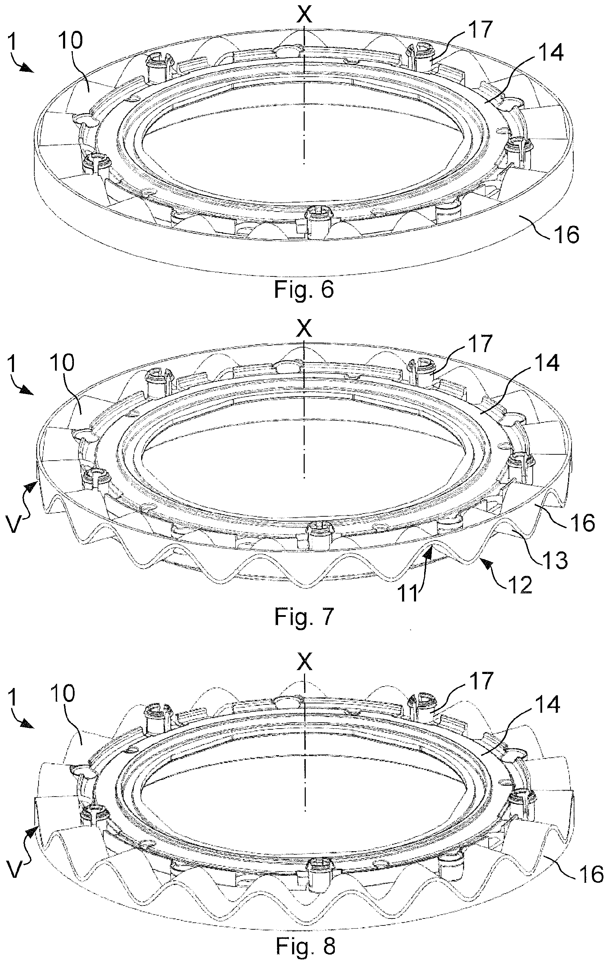

In den Figuren 6 bis 8 ist jeweils eine bezüglich der Abschlusshülse 16 von dem Kühlrad 1 der Figuren 1 bis 4 abweichendes Kühlrad 1 dargestellt, sodass die weiteren, nicht die Abschlusshülse 16 betreffenden Beschreibungen auch für die Kühlräder 1 gemäß den Figuren 6 bis 8 gelten.

Die Abschlusshülse 16, wie sie in Figur 6 dargestellt ist, deckt dabei die Kühlschaufel 10 über die gesamte Erstreckung der Kühlschaufel 10 parallel der Rotationsachse X ab. Vorliegend ist das gesamte Kühlrad 1 mit der Abschlusshülse 16 einstückig und z.B. im Spritzgussverfahren ausgebildet.

Bei der Abschlusshülse 16 gemäß Figur 7 und bei der Abschlusshülse gemäß Figur 8 ist jeweils vorgesehen, dass die Kühlschaufel 10 an ihrem in Radialrichtung R außenliegenden Randbereich bzw. an ihrer Außenkante 13 parallel der Rotationsachse X verlängert wird. Vorzugsweise ist vorgesehen, dass sich die Abschlusshülse 16 dabei von einem benachbart anordenbaren Stator 4 weg erstreckt.

Jede der in den Figuren 6 bis 8 dargestellten Abschlusshülsen 16 kann eine Verschmutzung der Kühlschaufel 10 bzw. des Kühlrades 1 reduzieren.

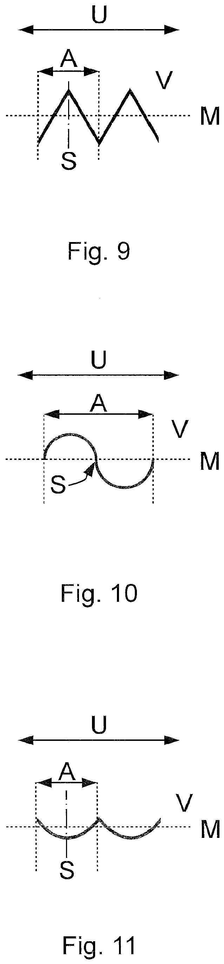

Die Kühlräder 1 gemäß den Figuren 1 bis 8, deren Kühlflächen 13 sowie deren Innenkanten 11 und Außenkanten 12 weisen jeweils einen sinusförmigen Verlauf auf. Davon abweichend illustrieren die Figuren 9 bis 11 jeweils alternative Verläufe V, wie sie an einem Kühlrad 1 und beispielsweise an einem Kühlrad 1 gemäß den Figuren 1 bis 8 vorgesehen sein könnten. Die Verläufe V sind jeweils aus einer Vielzahl von sich in Umfangsrichtung U wiederholenden Abschnitten A zusammengesetzt, wobei der Verlauf V innerhalb eines Abschnitts A um eine gedachte und zu der Rotationsachse X orthogonale Mittelebene M alterniert.

Beispielsweise kann der Verlauf der Kühlschaufel 9 bzw. der Kühlfläche 13 wie in Figur 9 dargestellt zick-zack-artig ausgeführt und eine den Verlauf beschreibende Funktion nicht differenzierbar sein. Der Verlauf ist dabei aus einer Vielzahl von zu der Symmetrieachse S achssymmetrischen Abschnitten A gebildet, welches sich in Umfangsrichtung wiederholen. Der vorliegend aus linearen Teilabschnitten zusammengesetzte Verlauf weist dabei zwar in Radialrichtung R verlaufende Kanten auf, durch welche es jedoch weiterhin zu einer vergleichsweise geringen Geräuschentwicklung kommt, da die Kühlfläche 13 vollständig geschlossen ist.

Der in Figur 10 beispielhaft dargestellte Verlauf V ist ähnlich einer Sinusfunktion, jedoch aus einer Vielzahl von Halbkreisen zusammengesetzt. Gemäß der vorliegenden Darstellung ist ein Abschnitt jeweils Punktsymmetrisch zu einem Spiegelpunkt S, wobei ein solcher Verlauf auch als Achssymmetrisch zu einer Symmetrieachse dargestellt werden kann, wenn der Abschnitt in Umfangsrichtung U verschoben angenommen wird.

In Figur 11 ist der dargestellte Verlauf V jeweils aus Teilkreisen bzw. Teil-Ellipsen zusammengesetzt, wobei ein Teilkreis bzw. eine Teil-Ellipse jeweils einen Abschnitt A bildet, welcher wiederum zu einer Symmetrielinie achssymmetrisch ist. Obgleich der in Figur 11 dargestellte Verlauf V bzw. eine den Verlauf V beschreibende Funktion nicht differenzierbar ist, weist der Verlauf unmittelbar benachbart zu einem in der Bildebene unterhalb anordenbaren Stator 4 keine in Radialrichtung R verlaufenden Kanten auf.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Kühlrad (1) zur Kühlung eines Stators (4) eines Elektromotors (2),
wobei das Kühlrad (1) an einem um eine Rotationsachse (X) rotierbaren Rotor (3) des Elektromotors (2) drehfest fixierbar ist,
wobei das Kühlrad (1) eine ringförmige, sich von einer radialinneren Innenkante (11) zu einer radialäußeren Außenkante (12) erstreckende und die Rotationsachse (X) in Umfangsrichtung (U) umlaufende Kühlschaufel (10) zur Erzeugung einer Luftströmung aufweist,
wobei die Kühlschaufel (10) eine sich von der Innenkante (11) zu der Außenkante (12) erstreckende Kühlfläche (13) aufweist,
wobei die Kühlfläche (13) und/oder die Kühlschaufel (10) in Umfangsrichtung (U) einen vorbestimmten und parallel der Rotationsachse (X) alternierenden Verlauf (V) aufweist.

2. Kühlrad nach Anspruch 1,
wobei die Kühlschaufel (10) die Rotationsachse (X) vollständig umläuft und in Umfangsrichtung (U) umfangsgeschlossen ist
und wobei der Verlauf (V) der Kühlfläche (13) und/oder der Kühlschaufel (10) insbesondere stetig ist.

3. Kühlrad nach Anspruch 1 oder 2,
wobei der Verlauf (V) der Kühlfläche (13) und/oder der Kühlschaufel (10) sich in Umfangsrichtung (U) periodisch wiederholt und insbesondere sich periodisch wiederholende Abschnitte (A) aufweist.

4. Kühlrad nach dem vorhergehenden Anspruch,
wobei zumindest ein sich periodisch wiederholender Abschnitt (A), durch welchen der sich in Umfangsrichtung (U) periodisch wiederholende Verlauf (V) gebildet wird, symmetrisch und insbesondere achssymmetrisch zu einer parallel der Rotationsachse (X) verlaufenden Symmetrielinie (S) ist.

5. Kühlrad nach Anspruch 3 oder 4,
wobei zumindest ein sich periodisch wiederholender Abschnitt (A), durch welchen der sich in Umfangsrichtung (U) periodisch wiederholende Verlauf (V) gebildet wird, in Umfangsrichtung (U) geneigt ist.

6. Kühlrad nach einem der vorhergehenden Ansprüche,
wobei die Außenkante (12) der Kühlschaufel (10) insbesondere vollständig auf einer Mantelfläche eines gedachten, das Kühlrad einhüllenden Zylinders oder Kegels verläuft.

7. Kühlrad nach einem der vorhergehenden Ansprüche,
wobei der Verlauf (V) der Kühlfläche (13) und/oder der Kühlschaufel (10) einer vorbestimmten Funktion folgt und
wobei die vorbestimmte Funktion eine sich periodisch wiederholende Funktion und insbesondere eine Sinusfunktion oder eine Überlagerung von Sinusfunktionen ist.

8. Kühlrad nach einem der vorhergehenden Ansprüche,
wobei die Kühlfläche (13) vollständig geschlossen ist.

9. Kühlrad nach einem der vorhergehenden Ansprüch 1 bis 8,
wobei die Kühlschaufel (10) sich von radialinnen nach radialau-ßen erstreckende und die Kühlfläche (13) segmentierende Ausnehmungen aufweist.

10. Kühlrad nach einem der vorhergehenden Ansprüche,
wobei die Innenkante (11) und/oder die Außenkante (12) einem vorbestimmten, stetigen und parallel zu der Rotationsachse alternierenden Verlauf folgt, welcher insbesondere zu dem Verlauf (V) der Kühlfläche (13) korrespondiert.

11. Kühlrad nach einem der vorhergehenden Ansprüche,
ferner aufweisend eine Flanschhülse (14) zur Montage des Kühlrades (1) an dem Rotor (3) des Elektromotors (1),
wobei die Kühlschaufel (10) an ihrer Innenkante (11) oder ihrer Außenkante (12) stoffschlüssig in die Flanschhülse (14) übergeht oder an der Flanschhülse (14) drehfest fixiert ist.

12. Kühlrad nach dem vorhergehenden Anspruch,
wobei an der Flanschhülse (14) zumindest ein ringförmiger Dichtvorsprung (15) ausgebildet ist, welcher sich parallel zu der Rotationsachse (X) erstreckt und die Rotationsachse (X) in Umfangsrichtung (U) vollständig umläuft,
wobei der zumindest eine Dichtvorsprung (15) ausgebildet ist, mit zumindest einem relativ zu dem Stator (4) ortsfesten und die Rotationsachse (X) in Umfangsrichtung (U) vollständig umlaufenden Gegenvorsprung (45) dichtend zusammen zu wirken und insbesondere eine Labyrinthdichtung zu bilden.

13. Kühlrad nach einem der vorhergehenden Ansprüche,
ferner aufweisend eine umfangsgeschlossene und die Rotationsachse (X) in Umfangsrichtung (U) umlaufende Abschlusshülse (16), welche das Kühlrad (10) radialaußen abschließt.

14. Kühlrad nach einem der vorhergehenden Ansprüche,
wobei die Kühlschaufel (10) ausgebildet ist, mit relativ zu dem Stator (4) ortsfesten Kühlelementen (41) zusammenzuwirken, welche insbesondere als sich in Radialrichtung (R) erstreckenden Kühlrippen (41) ausgebildet sind, und bei einer Rotation des Kühlrades (1) um die Rotationsachse (X) ab einer vorbestimmten Geschwindigkeit eine turbulente Strömung zwischen der Kühlschaufel (10) und den Kühlelementen zu erzeugen.

15. Elektromotor (2), insbesondere Außenläufermotor mit einem Stator (4) und einem Rotor (3) sowie einem Kühlrad (1) gemäß einem der vorhergehenden Ansprüche,
wobei das Kühlrad (1) drehfest an dem Rotor (3) fixiert und mit dem Rotor (3) um eine gemeinsame Rotationsachse (X) rotierbar ist
und wobei an dem Stator (4) benachbart zu dem Kühlrad (1) Kühlelemente (41) vorgesehen sind, sodass durch eine Rotation des Rotors (3) durch das Kühlrad (1) eine Luftströmung erzeugbar ist, welche Wärme von den Kühlelementen (41) abführt.
